# EUROPEAN PATENT APPLICATION

(11) **EP 1 508 881 A1**
(43) Date of publication of application: **23.02.2005**
(21) Application number: 04255000.4
(22) Date of filing: 19.08.2004
(51) Int. Cl.: G07C 3/00

(54) **Method and apparatus for recording and retrieving maintenance, operating and repair data for turbine engine components**

(30) Priority: 22.08.2003 US 604870
(71) Applicant: GENERAL ELECTRIC COMPANY, Schenectady, NY 12345 (US)
(72) Inventor: Joshi, Narendra Digamber, Cincinnati, OH 45241 (US); Frantz, Richard Lamar, West Chester, OH 45069 (US)
(74) Representative: Pedder, James Cuthbert

(57) **Abstract**

Information storage devices (24, 34, 44, 54, 64) are permanently deployed on individual components (22, 32, 42, 52, 62) of turbine engines (20) to permanently record operating, repair and maintenance data on the parts that comprise the individual components (22, 32, 42, 52, 62). Ensuring that such data will not be lost when individual components (22, 32, 42, 52, 62) or their parts are replaced in an engine, allows the use of life limited parts in turbine engines (20) and improves their reliability. The information storage devices (24, 34, 44, 54, 64) can be accessed to record maintenance or to record changes when repairs are done. They can also be attached to external circuitry for the purpose of analyzing, downloading or recording data remotely, allowing analysis of component (22, 32, 42, 52, 62) operating, repair, and maintenance information.

## Description

The invention relates to the field of turbine engines, the individual engine components that make up turbine engines, and the parts that comprise individual engine components.

Turbine engines are usually intended for use in industrial applications or in transportation such as in aircraft, marine, military, or automotive applications. In some environments service and safety requirements are extremely demanding such as those employed in aircraft transportation equipment. In many other applications the engines, in general, do not have the demanding safety requirements of aircraft engines. However, as more advanced engines are designed and as they find application in increasingly demanding service environments, it is becoming increasingly important to track the operating history of engine parts in all the engines so that they can be studied and retired at an appropriate time.

Life limited parts are parts that are retired after a defined period of usage to avoid part failure while in use and are often used in critical applications where the consequences of failure are unacceptable. An advantage of thorough and correct logging of engine operation and part service history allows use of life limited parts which constitutes an improvement in overall engine dependability.

Historically, in some applications, very detailed records of engines and part service history are kept as in the case of aircraft engines where Federal Aviation Administration (FAA) requirements must be met. In other applications, especially where government mandated guidelines are not required to be met, paper based log books have been kept incorporating service records for turbine engines. The problem with such paper based logs is that sometimes they are not kept up to date, sometimes are updated with incorrect information, and sometimes are lost altogether along with their history of engine operation and maintenance. Further, these logs are often kept for the engine as a whole rather than for the individual components of the engine. This creates a complication in that sometimes individual engine components are replaced with other components while the rest of the engine remains unchanged. These components usually constitute a section of the engine such as a compressor stage or a turbine stage or a combustor module. The components are comprised of many individual parts. Consequently, the history of individual parts is lost in the process of routine maintenance and upkeep.

Using more modern procedures, parts are generally logged into a centrally located electronic database. The engine control system logs hours and cycles as the engine is used. When the engine is subjected to repair or overhaul, these numbers are manually logged against appropriate parts in the centrally located database. The data is entered manually or using bar coded labels or tags on the hardware by maintenance personnel.

This process is well controlled in the aircraft engine world as it is a requirement of the FAA and compliance is mandatory. In the industrial world FAA compliance is not mandatory, and it is the responsibility of each individual operator. Some operators are conscientious and do maintain detailed records.

However, engine parts are sometimes replaced during on-site maintenance. Sometimes entire components of turbine engines get replaced without replacing the engine as a whole. When that happens, using conventional procedures relating to the engine as a whole, the operating and maintenance or repair history not only of individual parts within a component, but of the entire engine component can be lost, and logging procedures relating to the engine as a whole can become misleading.

In another alternative, a leased engine may be installed on site while the removed engine is repaired in the shop. This can lead to confusion about the operating and maintenance or repair history of both engines.

In these examples and others like them, the confusion complicates the use of life limited parts and prevents accurate data on the operation and maintenance or repair of individual engine components and their parts. A more accurate and reliable method for recording the data is needed.

In one embodiment, the invention relates to an apparatus for recording, storing, updating, and retrieving operating, maintenance and repair information relating to individual components of turbine engines, said apparatus comprising at least one information storage device permanently deployed on at least one individual engine component further comprising:
identification information about at least one part of the engine component stored thereon;
at least one data register having data storage capability, said data register referenced by stored identification information of at least one part and
a parameter recorded by said data register;
wherein said information storage device is accessible for at least one of the following:
recording and storing maintenance work done when the engine component undergoes maintenance;
updating said information storage device when a part is exchanged for a replacement part;
retrieving recorded and stored information in said information storage device under certain selected conditions.

In another aspect, the invention relates to an apparatus for electronically recording, storing, updating, and retrieving operating, repair, and maintenance information relating to individual components of gas turbine engines comprising at least one information storage device permanently deployed on at least one individual engine component further comprising;
identification information of at least one life limited part of the engine component stored thereon;
at least one data register having data storage capability for life limited parts, said data register referenced by stored identification numbers of at least one life limited part and a parameter recorded by said data register;
wherein said information storage device is accessible for at least one of the following:
recording and storing maintenance work done when the engine component undergoes maintenance;
updating said information storage device with identification information of replacement life limited parts and appropriate settings for at least one data register when a life limited part is changed;
retrieving recorded and stored information in said information storage device under certain selected conditions.

In another embodiment the invention relates to a method for recording, storing, updating and retrieving operating and maintenance information relating to an individual component of a turbine engine comprising the steps of:
providing at least one information storage device permanently deployed on at least one individual engine component;
storing identification information about at least one part of the individual engine component in the information storage device;
providing at least one data register in the information storage device having data storage capability;
referencing each data register with stored identification information of at least one part and a parameter recorded by each data register;
operating the engine and recording operating parameter data in at least one data register; and
at least one of the following:
   storing maintenance work done when the engine component undergoes maintenance;
   updating the information storage device when a part is exchanged for a replacement part;
   retrieving recorded and stored information from the information storage device under certain selectable conditions.

In another aspect the invention relates to a method for electronically recording, storing, updating and retrieving operating and maintenance information relating to an individual component of a gas turbine engine comprising the steps of:
providing at least one information storage device permanently deployed on at least one individual engine component;
storing identification information about at least one life limited part of the individual engine component in the information storage device;
providing at least one data register in the information storage device having data storage capability to record data parameters being measured and place them in a storage area of the information storage device;
referencing each data register with stored identification information of at least one life limited part and a parameter recorded by each data register;
operating the engine and recording operating parameter data in at least one data register; and
at least one of the following:
   storing maintenance work done when the engine component undergoes maintenance;
   updating the information storage device when a part is exchanged for a replacement part;
   retrieving recorded and stored information from the information storage device under certain selectable conditions.

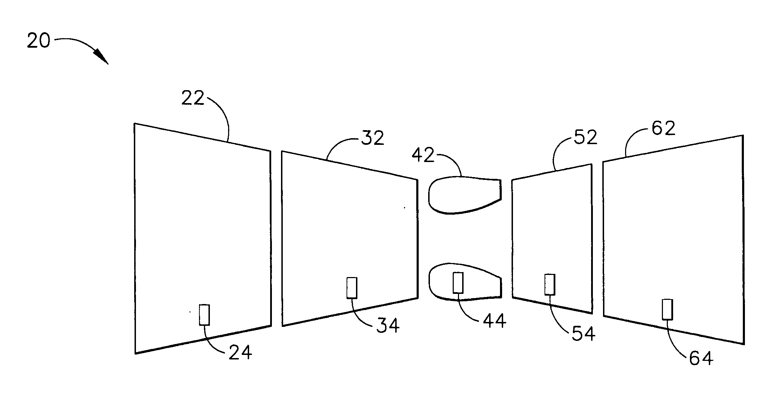

The invention will now be described in greater detail, by way of example, with reference to the drawing, the single figure of which is a view of a turbine engine showing its components with information storage devices permanently attached.

The invention solves the problem of keeping accurate repair, maintenance, and operating data for turbine engine components and the parts that make up the components. This is accomplished by incorporating information storage devices permanently deployed on individual engine components. The information storage devices may be placed on the engine components by various means but are mounted or made integral with the components in such a way that they are permanently deployed and are not removable using simple mechanics' tools or without destroying the information storage device. Each information storage device records and stores the repair, operating and maintenance history of the individual parts present in the engine component by storing the status (i.e. the contents) of data registers present in the information storage device and is periodically updated by onboard or remote devices. The information can also be updated by maintenance or repair personnel when the engine component undergoes maintenance or repair.

In one embodiment updating may require one or both of two actions: (1) resetting the values that are in the data registers or (2) writing directly to the memory. In this embodiment identification information relating to the part is written directly to memory, each data register associated with the part is referenced accordingly, and the data parameters in the data registers are reset. In any case, each data register maintains the current value of the parameter being measured and places it (stores it) appropriately, according to the part identification information, in a storage area of the information storage device at certain selectable times.

The information storage device can employ a variety of capabilities and strategies to ensure that the operating, repair and service information of individual parts is complete and correct.

Use of information storage devices permanently deployed on engine components enhances the use of life limited parts in the component. The repair, operating, and maintenance data needed to accurately determine when the life limited components should be retired is available in the information storage devices. In some cases a plurality of information storage devices may be deployed on one component.

Referring to the drawing, the drawing is a view of one embodiment of a generic turbine engine 20 showing its components 22, 32, 42, 52, 62 with information storage devices 24, 34, 44, 54, 64 permanently attached. Component 22 is a low pressure compressor; component 32 is a high pressure compressor; component 42 is a combustor module; component 52 is a high pressure turbine; and component 62 is a low pressure turbine. In the following, reference number 22 will be used as an example when referring to a component, and the comments should be taken to apply each of the other components 32, 42, 52, 62 as well. Similarly, each information storage device, 24, 34, 44, 54, 64, will be referred to by the example of information storage device 24, and the commentary should be taken to refer to the other information storage devices 34, 44, 54, 64 as well for each respective information storage device 24, 34, 44, 54, 64 on each respective component 22, 32, 42, 52, 62 as shown in the drawing.

Each component 22 has at least one information storage device 24 permanently deployed on the component 22. This information storage device 24 serves as a registry and has in it the identification information for each part that is to be studied and recorded for the component 22 on which mounted. The information storage device 24 also has a set of data registers with the ability to store the data recorded in each data register for each of the parts, and each data register is identified with the identification information of the part to be monitored and recorded. This storage may occur periodically at certain selectable times determined by the engine control circuitry.

In one embodiment the engine control system updates the relevant information on this set of data registers every time the engine is stopped, and the information recorded in the data registers is stored. Information updated includes items such as hours spent at rated power, part power, number of starts and other data for each part of interest.

In another embodiment the engine control system updates and records the relevant information in the set of data registers periodically, and the data is stored at certain selectable times chosen by the operators.

Information is permanently stored in the information storage device 24 for each component 22 and is accessible for download. Though accessible by authorized personnel, the recorded and the stored information in the information storage device 24 is only accessible by authorized personnel who possess an electronic key for accessing the information. In this embodiment, repair or maintenance personnel have separate electronic keys which permit them to update information in the information storage device 24 regarding maintenance or repair but only to their level of need. Further, their access to the information is restricted according to their level of need through the access permitted by their individual electronic keys.

If a part is exchanged for a replacement part, authorized personnel will update the information storage device 24 with the identification numbers of the changed part and will appropriately set the data registers. In one embodiment where data on life limited parts is recorded and stored in the information storage device 24, authorized personnel will be able to query the information storage device 24 to understand how much life is retained in the life limited parts and determine when any particular part should be replaced. This ability to query operational history for individual parts that comprise a turbine engine component 22 allows the use of life limited parts even though the individual turbine engine components 22 may be switched in or out of a particular turbine engine 20 over the course of its operational life.

In addition, monitoring and diagnostics may also be performed by authorized personnel who query the information storage device 24 electronically to update a central data base which may be on board or off board the turbine engine 20.

In one embodiment this query capability is used to monitor maintenance and repair activity performed on the component 22 to ensure that contractual requirements are met.

In one aspect the information storage device 24 employs electronic interlock circuitry to prevent tampering with the data stored in the information storage device 24. In this embodiment authorized personnel access the data by utilizing an electronic key to allow access to the information.

Another embodiment disables the engine component 22 when repair or maintenance is performed and will not allow the engine component 22 to function until the stored data is updated with the appropriate details of the repair or maintenance.

Another embodiment utilizes circuitry external to the permanently installed information storage device 24 to poll a plurality of engine components 22 which are deployed on one engine or on a plurality of engines to analyze and predict individual engine performance, engine fleet performance, individual component performance in comparison to other components 22, individual part performance in comparison to other parts, or to predict future maintenance requirements of components 22 or component parts.

When the components 22 of turbine engines 20 are changed, removing one or more components 22 from an engine and replacing with new components 22, information on the status of life limited parts is never lost due to the recorded and permanently stored data in the information storage device 24.

For the sake of good order, various aspects of the invention are set out in the following clauses:-
1. An apparatus for recording, storing, updating, and retrieving operating, maintenance and repair information relating to individual components of turbine engines, said apparatus comprising at least one information storage device permanently deployed on at least one individual engine component further comprising:
   a) identification information about at least one part of the engine component stored thereon;
   b) at least one data register having data storage capability, said data register referenced by stored identification information of at least one part and a parameter recorded by said data register;
   wherein said information storage device is accessible for at least one of the following:
   i) recording and storing maintenance work done when the engine component undergoes maintenance;
   ii) updating said information storage device when a part is exchanged for a replacement part;
   iii) retrieving recorded and stored information in said information storage device under certain selected conditions.
2. The apparatus of Clause 1 wherein information in said data register is updated by an engine control system.
3. The apparatus of Clause 1 wherein information in said data register is stored in said information storage device periodically at certain selected times.
4. The apparatus of Clause 1 wherein information in said data register is stored and updated in said information storage device each time the engine is stopped.
5. The apparatus of Clause 1 wherein information can only be added to said information storage device.
6. The apparatus of Clause 1 wherein said information storage device is capable of storing information over the operating life of an engine component.
7. The apparatus of Clause 6 wherein the stored information from each data register is permanent.
8. The apparatus of Clause 7 wherein stored information remains with the engine component for the life of the engine component.
9. The apparatus of Clause 1 wherein said information storage device is made an integral part of individual engine components.
10. The apparatus of Clause 1 wherein a plurality of said information storage devices is permanently mounted on a plurality of engine components.
11. The apparatus of Clause 10 wherein a plurality of said information storage devices on a plurality of engine components is polled to predict future maintenance requirements of the engine.
12. The apparatus of Clause 1 wherein anti-tampering devices prevent tampering with the data contents of said information storage device.
13. The apparatus of Clause 1 wherein maintenance activity must be recorded in said information storage device when maintenance is done for the engine to operate.
14. The apparatus of Clause 1 wherein the information recorded in said information storage device is provided by circuitry on board an engine.
15. The apparatus of Clause 1 wherein the information recorded in said information storage device is provided by circuitry external to said engine component.
16. The apparatus of Clause 1 wherein information is supplied to said information storage device from a remote location.
17. The apparatus of Clause 1 wherein at least one of the following:
   a) recorded information
   b) stored information in said information storage device is retrieved from a remote location.
18. The apparatus of Clause 1 wherein at least one of the following:
   a) recorded information
   b) stored information
   in said information storage device is used to predict future maintenance requirements of at least one engine component.
19. The apparatus of Clause 1 wherein said information storage device is queried to ensure that contractual requirements are met.
20. An apparatus for electronically recording, storing, updating, and retrieving operating, repair, and maintenance information relating to individual components of gas turbine engines comprising at least one information storage device permanently deployed on at least one individual engine component further comprising:
   a) identification information of at least one life limited part of the engine component stored thereon;
   b) at least one data register having data storage capability for life limited parts, said data register referenced by stored identification numbers of at least one life limited part and a parameter recorded by said data register;
   wherein said information storage device is accessible for at least one of the following:
   i) recording and storing maintenance work done when the engine component undergoes maintenance;
   ii) updating said information storage device with identification information of replacement life limited parts and appropriate settings for at least one data register when a life limited part is changed;
   iii) retrieving recorded and stored information in said information storage device under certain selected conditions.
21. The apparatus of Clause 20 wherein stored information remains in said information storage device on the engine component permanently.
22. The apparatus of Clause 20 wherein information in at least one data register is stored in a storage area in said information storage device periodically.
23. The apparatus of Clause 22 wherein information in at least one data register is stored in said information storage device each time the engine is stopped.
24. A method for recording, storing, updating and retrieving operating and maintenance information relating to an individual component of a turbine engine comprising the steps of:
   a) providing at least one information storage device permanently deployed on at least one individual engine component;
   b) storing identification information about at least one part of the individual engine component in the information storage device;
   c) providing at least one data register in the information storage device having data storage capability;
   d) referencing each data register with stored identification information of at least one part and a parameter recorded by each data register;
   e) operating the engine and recording operating parameter data in at least one data register; and
   f) at least one of the following:
      i) storing maintenance work done when the engine component undergoes maintenance;
      ii) updating the information storage device when a part is exchanged for a replacement part;
      iii) retrieving recorded and stored information from the information storage device under certain selectable conditions.
25. The method of Clause 24 comprising periodically storing information from at least one data register in a storage area of the information storage device at certain selectable times.
26. The method of Clause 25 comprising storing information from at least one data register in the information storage device each time the engine is stopped.
27. A method for electronically recording, storing, updating and retrieving operating and maintenance information relating to an individual component of a gas turbine engine comprising the steps of:
   a) providing at least one information storage device permanently deployed on at least one individual engine component;
   b) storing identification information about at least one life limited part of the individual engine component in the information storage device;
   c) providing at least one data register in the information storage device having data storage capability to record data parameters being measured and place them in a storage area of the information storage device;
   d) referencing each data register with stored identification information of at least one life limited part and a parameter recorded by each data register;
   e) operating the engine and recording operating parameter data in at least one data register; and
   f) at least one of the following:
      i) storing maintenance work done when the engine component undergoes maintenance;
      ii) updating the information storage device when a part is exchanged for a replacement part;
      iii) retrieving recorded and stored information from the information storage device under certain selectable conditions.
28. The method of Clause 27 comprising periodically storing information from at least one data register in a storage area in the information storage device at certain selectable times.
29. The method of Clause 27 comprising keeping stored information in the information storage device on the engine component for the life of the engine component.

## Claims

1. An apparatus for recording, storing, updating, and retrieving operating, maintenance and repair information relating to individual components (22, 32, 42, 52, 62) of turbine engines (20), said apparatus comprising at least one information storage device (24, 34, 44, 54, 64) permanently deployed on at least one individual engine component (22, 32, 42, 52, 62) further comprising:
a) identification information about at least one part of the engine component (22, 32, 42, 52, 62) stored thereon;
b) at least one data register having data storage capability, said data register referenced by stored identification information of at least one part and a parameter recorded by said data register;
wherein said information storage device (24, 34, 44, 54, 64) is accessible for at least one of the following:
1) recording and storing maintenance work done when the engine component (22, 32, 42, 52, 62) undergoes maintenance;
2) updating said information storage device (24, 34, 44, 54, 64) when a part is exchanged for a replacement part;
3) retrieving recorded and stored information in said information storage device (24, 34, 44, 54, 64) under certain selected conditions.

2. The apparatus of Claim 1 wherein information in said data register is updated by an engine control system.

3. The apparatus of Claim 1 or Claim 2 wherein information can only be added to said information storage device (24, 34, 44, 54, 64), and at certain selectable times information is permanently stored in said Information storage device (24, 34, 44, 54, 64) for the life of the engine component (22, 32, 42, 52, 62).

4. The apparatus of any one of the preceding claims wherein a plurality of said information storage devices (24) on a plurality of engine components (22, 32, 42, 52, 62) is polled to predict future maintenance requirements of the engine.

5. The apparatus of any one of the preceding claims wherein information stored in said information storage device (24, 34, 44, 54, 64) is used to predict future maintenance requirements of at least one engine component (22, 32, 42, 52, 62).

6. The apparatus of any one of the preceding claims wherein maintenance activity must be recorded in said information storage device (24, 34, 44, 54, 64) when maintenance is done for the engine to operate and anti-tampering devices prevent tampering with the data contents of said information storage device (24, 34, 44, 54, 64).

7. The apparatus of any of the preceding claims wherein information stored in said information storage device (24, 34, 44, 54, 64) is provided by circuitry external to said information storage device (24, 34, 44, 54, 64).

8. The apparatus of any of the preceding claims wherein said information storage device (24, 34, 44, 54, 64) is queried to ensure that contractural requirements are met.

9. An apparatus for electronically recording, storing, updating, and retrieving operating, repair, and maintenance information relating to individual components (22, 32, 42, 52, 62) of gas turbine engines (20) comprising at least one information storage device (24, 34, 44, 54, 64) permanently deployed on at least one individual engine component (22, 32, 42, 52, 62) further comprising:
a) identification information of at least one life limited part of the engine component (22, 32, 42, 52, 62) stored thereon;
b) at least one data register having data storage capability for life limited parts, said data register referenced by stored identification numbers of at least one life limited part and a parameter recorded by said data register;
wherein said information storage device (24, 34, 44, 54, 64) is accessible for at least one of the following:
1) recording and storing maintenance work done when the engine component (22, 32, 42, 52, 62) undergoes maintenance;
2) updating said information storage device (24, 34, 44, 54, 64) with identification information of replacement life limited parts and appropriate settings for at least one data register when a life limited part is changed;
3) storing and updating information from the data registers periodically at certain selectable times;
4) retrieving recorded and stored information in said information storage device (24, 34, 44, 54, 64) under certain selected conditions.

10. A method for recording, storing, updating and retrieving operating and maintenance information relating to an individual component (22, 32, 42, 52, 62) of a turbine engine (20) comprising the steps of:
a) providing at least one information storage device (24, 34, 44, 54, 64) permanently deployed on at least one individual engine component (22, 32, 42, 52, 62);
b) storing identification information about at least one part of the individual engine component (22, 32, 42, 52, 62) in the information storage device (24, 34, 44, 54, 64);
c) providing at least one data register in the information storage device (24, 34, 44, 54, 64) having data storage capability;
d) referencing each data register with stored identification information of at least one part and a parameter recorded by each data register;
e) operating the engine and recording operating parameter data in at least one data register; and
f) at least one of the following:
1) storing maintenance work done when the engine component (22, 32, 42, 52, 62) undergoes maintenance;
2) updating the information storage device (24, 34, 44, 54, 64) when a part is exchanged for a replacement part;
3) retrieving recorded and stored information from the information storage device (24, 34, 44, 54, 64) under certain selectable conditions;
4) storing information from at least one data register in a storage area of the information storage device (24, 34, 44, 54, 64) at certain selectable times;
5) storing information in the information storage device (24, 34, 44, 54, 64) on the engine component (22, 32, 42, 52, 62) for the life of the engine component (22, 32, 42, 52, 62).
